Europäisches Patentamt

European Patent Office

Office européen des brevets

(19)

(11) Numéro de publication: **0 141 703**
**B1**

(12) **FASCICULE DE BREVET EUROPEEN**

(45) Date de publication du fascicule du brevet:
**20.04.88**

(21) Numéro de dépôt: **84401855.6**

(22) Date de dépôt: **19.09.84**

(51) Int. Cl.⁴: **A 23 N 17/00,** B 01 F 5/26

(54) **Groupe pour la préparation d'aliments pour le bétail.**

(30) Priorité: **07.10.83 FR 8316017**

(43) Date de publication de la demande:
**15.05.85 Bulletin 85/20**

(45) Mention de la délivrance du brevet:
**20.04.88 Bulletin 88/16**

(84) Etats contractants désignés:
**BE DE FR GB IT NL**

(56) Documents cités:
**EP - A - 0 018 441**
**DE - B - 1 632 878**
**FR - A - 2 056 923**

(73) Titulaire: **COMIA F.A.O. S.A. Société Anonyme dite:,**
**27, Boulevard de Chateaubriant, F-35500 Vitre (FR)**

(72) Inventeur: **Bouriau, Bernard, Le Marais de Guenot,**
**F-35500 Vitre (FR)**

(74) Mandataire: **Jolly, Jean-Pierre et al, Cabinet BROT et**
**JOLLY 83, rue d'Amsterdam, F-75008 Paris (FR)**

ACTORUM AG

## Description

La présente invention concerne un groupe destiné à broyer ou aplatir et à mélanger les différents composants intervenant dans les aliments pour bétail.

Comme on le sait, les aliments pour bétail sont composés d'un mélange d'au moins un produit nutritif, tel que des céréales broyées et d'au moins une matière additive, telle qu'un complément vitaminé, que l'on désignera par la suite CMV.

Un tel mélange est effectué actuellement soit dans un mélangeur du type vertical, soit dans un mélangeur du type horizontal.

Par le brevet DE-B-1 632 878, on connaît un mélangeur vertical selon le préambule de la revendication 1. Le fond de ladite chambre inférieure de mélange a une forme prismatique de section triangulaire se rétrécissant vers le bas. Le moyen de transfert est constitué par une seconde vis d'Archimède d'axe horizontal qui véhicule les matières premières vers l'extrémité inférieure de la vis d'Archimède d'axe vertical, laquelle remonte les matières premières et les redéverse au sommet de la chambre inférieure. Il se produit ainsi un mouvement cyclique des matières premières, de bas en haut puis de haut en bas, au cours duquel ces dernières sont progressivement mélangées. Le mélange résulte de la vitesse d'écoulement différentielle des matières premières après un temps de fonctionnement déterminé.

Les matières premières stockées dans la chambre supérieure glissent sur la cloison inclinée et s'écoulent vers la chambre inférieure en passant dans l'appareil de traitement où elles sont écrasées.

Toutefois, l'appareil de traitement d'un tel mélangeur est monté à l'extérieur de la cuve et augmente donc notablement l'encombrement du mélangeur relativement à sa capacité de production. De même, le fond prismatique augmente l'encombrement en hauteur de la cuve.

De plus, la cuve a une forme parallélépipédique peu propice à l'obtention d'un bon mélange. Enfin, ce mélangeur qui utilise deux vis d'Archimède est trop complexe et donc trop coûteux et nécessite un entretien permanent.

Un mélangeur horizontal comprend généralement un récipient en forme d'auge d'axe horizontal, dans lequel est monté rotatif, autour dudit axe horizontal, un rotor brasseur constitué par exemple par une vis à double spires qui s'enroulent dans des sens différents; ce mélangeur présente les mêmes défauts que le mélangeur vertical susmentionné, puisqu'il comprend un broyeur indépendant monté à l'extérieur du récipient. De plus, il nécessite pour son fonctionnement une puissance motrice élevée, de sorte que les aliments qu'il permet d'obtenir sont relativement chers.

La présente invention a pour but de remédier à ces inconvénients et, à cet effet, elle concerne un groupe pour la préparation d'aliments pour le bétail, selon la partie caractérisante de la revendication 1.

L'appareil de traitement et son moteur reposent sur une tablette horizontale formant la base dudit dégagement, ladite tablette étant légèrement surélevée par rapport au fond de la cuve afin de permettre le libre passage du fléau.

Ainsi, contrairement aux appareils mélangeurs selon la technique antérieure citée, dans le groupe selon l'invention, la chambre de mélange, la chambre de stockage, le broyeur ou l'aplatisseur sont réunis en un seul ensemble compact, dont l'encombrement est pratiquement celui de la cuve. Cet ensemble est de construction très simple puisqu'il peut être réalisé à l'aide d'une seule tôle roulée.

De plus, le groupe selon l'invention peut, sans modification de sa structure, recevoir soit un broyeur, soit un aplatisseur. On notera encore que sa capacité peut être changée, en modifiant uniquement sa hauteur.

Toutes ces qualités en font un outil de coût modéré, parfaitement adapté aux petites exploitations d'élevage de bétail qui ne pouvaient jusqu'à présent s'offrir un appareil de ce type.

Le fléau peut avoir soit une longueur légèrement inférieure au rayon intérieur du corps cylindrique et tourner autour de l'une de ses extrémités, soit une longueur légèrement inférieure au diamètre interne du corps cylindrique et être montée tournante autour de son milieu. Il va de soi que l'on peut utiliser deux ou plusieurs fléaux radiaux. Dans tous les cas, le fléau balaie la surface du fond de la chambre de mélange en passant périodiquement sous l'appareil de traitement, puis sous la vis d'Archimède. Il entraîne donc la farine sortant du broyeur, ainsi que les matières qui se trouvent déjà dans la chambre de mélange, en même temps qu'il les prémélange.

Avantageusement, l'extrémité inférieure de la vis d'Archimède est située à un niveau inférieur à celui du fond de la cuve et son extrémité supérieure se trouve au niveau de la partie la plus haute de la chambre de mélange en face d'un orifice par lequel la matière transportée par la vis se déverse dans la chambre de mélange.

La vis d'Archimède est enfermée dans un carter vertical se terminant à sa partie inférieure par un puisard alimenté par gravité depuis la chambre de mélange à travers une ouverture formée dans la paroi de la cuve au niveau du fond.

Ledit carter présente à sa partie supérieure une bouche ou trappe pour recueillir l'aliment lorsque l'opération de mélange est terminée.

Dans le but d'alléger la pression qui s'exerce sur le fond de la cuve et sur le fléau, une pluralité de tiges cylindriques horizontales sont fixées à l'intérieur de la chambre de mélange, au-dessus du fléau.

D'autres avantages et caractéristiques de l'invention ressortiront de la description qui va suivre d'un mode de réalisation, en regard des dessins annexés dans lesquels:

La figure 1 est une vue en perspective du groupe selon l'invention agencé en mélangeur broyeur;

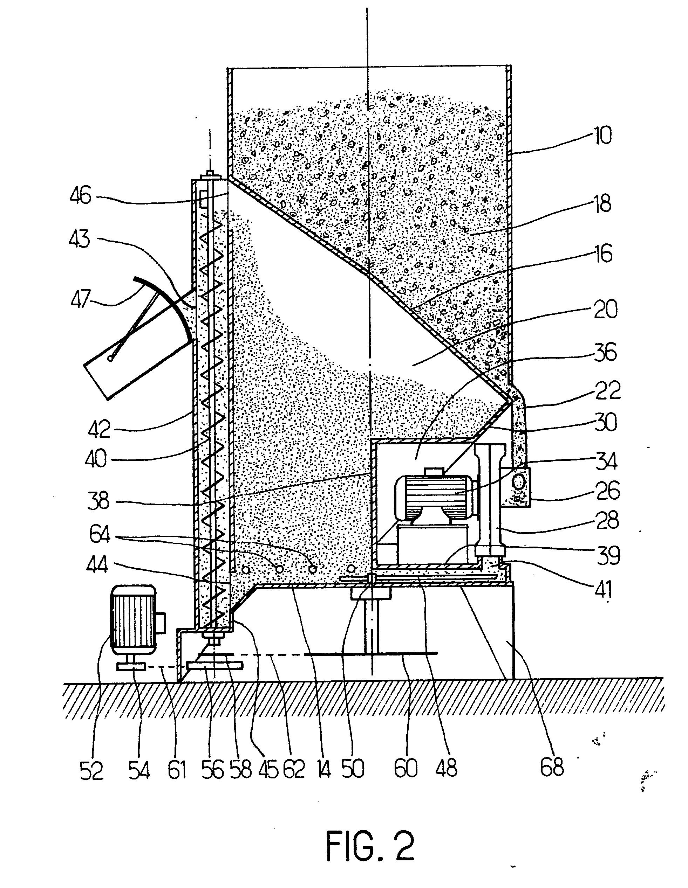

La figure 2 est une vue en coupe suivant le dièdre II–II de la figure 1; et

La figure 3 est une vue partielle en perspective avec arrachement partiel du groupe de la figure 1 montrant l'intérieur de la chambre de mélange.

Avec référence aux figures, le groupe pour la préparation d'aliments pour bétail comprend une cuve cylindrique 10 d'axe vertical et pourvue d'un fond plat 14. La cuve est divisée intérieurement par une cloison inclinée 16 en une chambre supérieure 18 pour le stockage des matières premières, par exemple des céréales, et en une chambre inférieure 20 dans laquelle le mélange est effectué.

Pratiquement, la cloison 16 est positionnée de façon que le volume de la chambre de stockage soit environ égal aux $^7/_{10}$ de celui de la chambre de mélange, c'est-à-dire qu'il correspond au rapport du volume de céréales au volume d'aliment farine pour un même lot.

Les matières premières peuvent s'écouler de la chambre de stockage 18 par une goulotte 22 branchée au niveau de la partie la plus basse de la chambre de stockage. La goulotte peut être munie d'une vanne de fermeture, non référencée, et elle débouche au-dessus d'une trémie collectrice 26 qui canalise les matières premières vers un broyeur 28 ou un aplatisseur monté à l'extérieur de la cuve 10, dans la goulotte 22.

Afin de réduire l'encombrement du groupe, le broyeur (ou l'aplatisseur) est disposé sous une paroi inclinée 30 définie par l'intersection de la cuve 10 par un plan incliné passant sensiblement par la base de la chambre de stockage 18 et coupant le fond 14 sensiblement selon un diamètre. De plus, le moteur 34 d'entraînement du broyeur ou de l'aplatisseur est logé dans la chambre de mélange 20, à l'intérieur d'une enceinte 36 pourvue d'un toit 37 en forme de V renversé afin de permettre l'écoulement de la matière broyée. L'enceinte est isolée de l'intérieur de la chambre de mélange par une paroi frontale 38.

Le broyeur 28 ou l'aplatisseur ainsi que le moteur 34 sont posés sur une tablette 39 légèrement surélevée par rapport au fond 14 de la cuve et qui occupe sensiblement la moitié de la section du fond de la cuve.

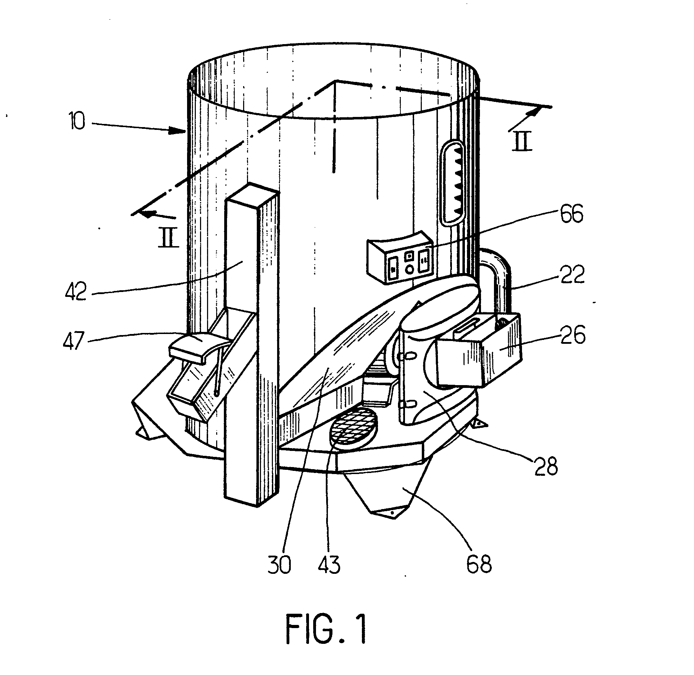

La farine produite par le broyeur ou la matière aplatie sortant de l'aplatisseur tombe dans la chambre de mélange 20, à travers une ouverture 41 formée dans la tablette 39. Celle-ci présente également une bouche 43 (figure 1) pour l'incorporation des CMV et qui est recouverte d'une toile filtrante assurant la décompression.

A l'extérieur de la cuve 10, dans une position décalée angulairement d'un angle sensiblement de 90° par rapport au broyeur 28, est montée une vis d'Archimède 40 d'axe vertical, qui s'étend sur toute la hauteur de la chambre de mélange 20 et dont l'extrémité inférieure se situe à un niveau inférieur par rapport au fond de la cuve. La vis d'Archimède est enfermée à l'intérieur d'un carter 42 qui peut, soit venir de fabrication avec la cuve 10, soit être rapporté sur cette dernière. L'alimentation de la vis d'Archimède 40 en farine se fait à sa base, dans un puisard 45 qui entoure l'extrémité inférieure de la vis et qui communique avec la chambre de mélange à travers une ouverture 44. Au niveau de l'extrémité supérieure de la vis, la cuve présente une ouverture 46 par laquelle la farine qui est remontée par la vis se déverse dans la chambre de mélange. Le carter 42 comprend vers sa partie supérieure une ouverture 43 commandée par une trappe 47 par laquelle l'aliment préparé peut être recueilli.

Sur le fond 14 de la chambre de mélange est montée tournante une tige horizontale ou fléau 48 destinée à extraire et à entraîner la farine sortant du broyeur 28 et celle se trouvant dans la chambre de mélange 20 vers la vis d'Archimède.

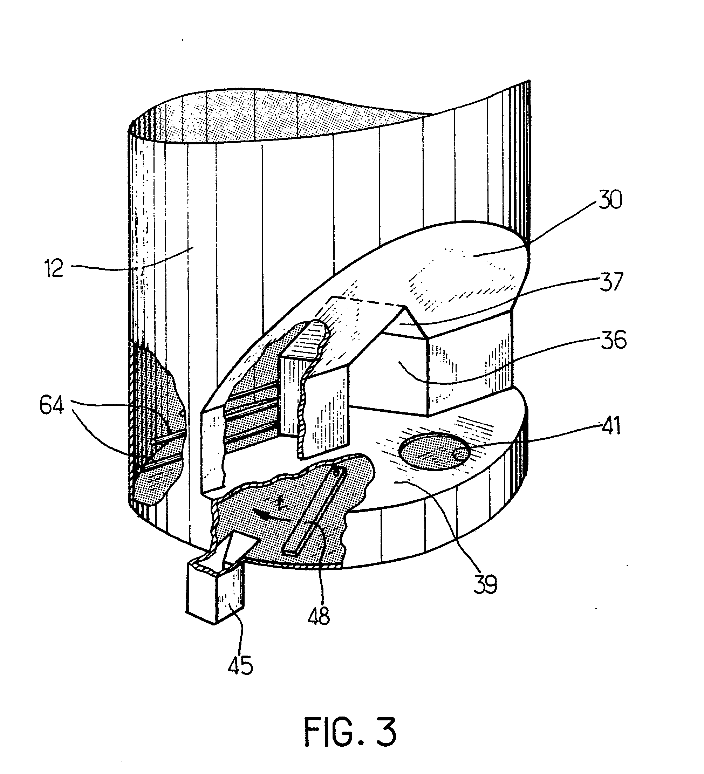

Dans le mode de réalisation de la figure 3, le fléau a une longueur légèrement inférieure au rayon intérieur de la cuve 10 et est fixé par une de ses extrémités sur un pivot 50 qui traverse le fond 14 en son centre, mais il peut également avoir une longueur sensiblement égale au diamètre de la cuve 10 et être fixé par son centre sur le pivot.

L'entraînement en rotation du fléau et de la vis d'Archimède peut être obtenu par un unique moteur 52, par l'intermédiaire d'une transmission à quatre pignons 54, 56, 58, 60 et deux courroies 61, 62.

La pression exercée sur le fléau par la colonne de farine contenue dans la chambre de mélange 20 est allégée par le fait que sur une partie de sa course, le fléau passe dans la zone libre située sous la tablette 39 et que sur le restant de sa course, il passe sous une pluralité de barres cylindriques 64 parallèles au fond 14 et fixées par leurs extrémités sur la paroi cylindrique de la cuve.

Tous les éléments de commande de protection des moteurs sont groupés dans un même coffret 66 (figure 1). L'ensemble de ce groupe peut être monté sur un piètement 68 ou sur un coffre.

On décrira à présent le fonctionnement du groupe selon l'invention:

On effectue le dosage des céréales et des CMV selon des quantités correspondant à un cycle. Les céréales sont versées dans la chambre de stockage 18 tandis que les CMV sont déversés par la bouche 43 directement dans la chambre de mélange 20.

On met ensuite en marche le moteur 34 du broyeur 28 et le moteur 52 d'entraînement de la vis d'Archimède 40 et du fléau 48 et on arme la minuterie qui détermine la durée du broyage et du mélange. Les céréales qui s'écoulent par la goulotte 22 sont acheminées par la trémie collectrice 26 vers le broyeur 28. La farine produite par ce dernier pénètre dans la chambre de mélange à travers l'ouverture 41 et est aussitôt entraînée en même temps que les CMV par le fléau tournant 48 dans le sens de la flèche f (figure 3). Le mélange tombe dans le puisard 45, est remonté par la vis d'Archimède 40 et est déversé par l'ouverture 43 dans la partie supérieure de la chambre de mélange 20.

Pendant tout le temps que dure le broyage, la matière contenue dans la chambre 20 est prémélangée par le fléau, puis reprise par la vis 40, remontée et déversée dans le haut. Il se produit donc un brassage permanent de la farine et des CMV jusqu'à l'arrêt des moteurs 34 et 52.

On remet ensuite en marche le moteur 52 seul et l'on ouvre la trappe 47: l'aliment farine est alors recueilli à l'extérieur de la chambre de mélange 20.

Le groupe selon l'invention permet donc de réunir en un seul ensemble, d'encombrement minimal, toutes les fonctions nécessaires à la préparation d'aliments pour bétail à partir des matières de base.

## Revendications

1. Groupe pour la préparation d'aliments pour le bétail à partir de matières premières, telles que des céréales et compléments minéraux vitaminés, comprenant:

— une cuve (10) dressée principalement verticalement et divisée intérieurement par une cloison inclinée (16) en une chambre supérieure de stockage (18), où les matières premières principales sont stockées, et en une chambre inférieure de mélange (20), dans laquelle est effectué le mélange avec des compléments introduits directement par une ouverture (43) dans cette chambre,

— un appareil de traitement (28), tel que broyeur ou aplatisseur, monté dans une enceinte (36) compris dans l'encombrement de la cuve, et un moteur (34) assurant l'entraînement de cet apparail,

— des moyens (22, 26, 41) permettant l'écoulement des matières premières respectivement depuis la partie la plus basse de la chambre de stockage (18) vers l'appareil de traitement (28) et de cet appareil vers la chambre de mélange (20),

— une vis d'Archimède (40) d'axe vertical, montée le long de la cuve du côté où la chambre de mélange est la plus haute, et

— un moyen de transfert (48) entraîné en rotation et disposé horizontalement au-dessus du fond de la chambre de mélange, de manière à transférer le produit qui sort de l'appareil de traitement vers la base de la vis d'Archimède, caractérisé en ce que:

— la cuve (10) est une cuve cylindrique d'axe vertical et à fond plat (14),

— l'enceinte (36) contient, outre l'appareil de traitement (28), son moteur d'entraînement (34) et est définie par un retrait (30) de la paroi latérale de la cuve (10) au niveau de la chambre de mélange, formant un dégagement extérieur à la cuve mais dans son encombrement, et

— le moyen de transfert est réalisé par au moins une tige horizontale ou fléau (48) tournant au-dessus du fond plat (14) de la chambre de mélange (20) et donc de la cuve.

2. Groupe selon la revendication 1, caractérisé en ce que l'appareil de traitement et son moteur reposent sur une tablette horizontale (39) formant la base dudit dégagement, ladite tablette étant légèrement surélevée par rapport au fond de la cuve afin de permettre le libre passage du fléau.

3. Groupe selon l'une des revendications 1 et 2, caractérisé en ce que l'enceinte (36) est pourvue d'une paroi supérieur (37) de section en forme de V renversé, de façon à permettre l'écoulement de la matière.

4. Groupe selon la revendication 1, caractérisé en ce que ledit fléau (48) a une longueur légèrement inférieure au rayon intérieur de la cuve cylindrique et tourne autour de l'une de ses extrémités.

5. Groupe selon la revendication 1, caractérisé en ce que ledit fléau a une longueur légèrement inférieure au diamètre intérieur de la cuve et tourne autour de son milieu.

6. Groupe selon l'une des revendications précédentes, caractérisé en ce que le fléau et la vis d'Archimède sont entraînés à partir d'un unique moteur (52).

7. Groupe selon la revendication 1, caractérisé en ce que l'extrémité inférieure de la vis d'Archimède (40) est située à un niveau inférieur à celui du fond (14) de la cuve et son extrémité supérieure se trouve au niveau de la partie la plus haute de la chambre de mélange en face d'un orifice (46) par lequel la matière transportée par la vis se déverse dans la chambre de mélange.

8. Groupe selon la revendication 7, caractérisé en ce que la vis d'Archimède (40) est enfermée dans un carter vertical (42) se terminant à sa partie inférieure par un puisard (45) alimenté par gravité depuis la chambre de mélange à travers une ouverture (44) formée dans la paroi de la cuve au niveau du fond (14).

9. Groupe selon l'une des revendications précédentes, caractérisé en ce qu'à l'intérieur de la chambre de mélange au-dessus du fléau, sont fixées plusieurs tiges cylindriques (64) disposées horizontalement.

10. Groupe selon la revendication 2, caractérisé en ce que l'ouverture (43) pour l'introduction des compléments minéraux vitaminés dans la chambre de mélange est formée sur la tablette (39).

## Claims

1. A unit for the preparation for foods for livestock from raw materials such as cereals and vitamin-enriched mineral complements, comprising:

— a vessel (10) which is disposed mainly vertically and which is internally divided by an inclined partition (16) into an upper storage chamber (18) where the main raw materials are stored and a lower mixing chamber (20) in which mixing is effected with complements which are introduced directly by way of an opening (43) into said chamber,

— a treatment apparatus (28) such as a crusher or grinding mill, mounted in an enclosure (36) within the outside contour of the vessel, and a motor (34) for driving said apparatus,

— means (22, 26, 41) permitting flow of the raw materials respectively from the lowest part of the storage chamber (18) towards the treatment apparatus (28) and from said apparatus towards the mixing chamber (20),

– an Archimedean screw (40) with a vertical axis, mounted along the vessel on the side where the mixing chamber is highest, and

– a transfer means (48) which is driven in rotation and which is disposed horizontally above the bottom of the mixing chamber, so as to transfer the material which issues from the treatment apparatus towards the base of the Archimedean screw, characterised in that:

– the vessel (10) is a cylindrical vessel with a vertical axis and with a flat bottom (14),

– besides the treatment apparatus (28), the enclosure (36) contains the drive motor (34) therefor and is defined by a set-back portion (30) of the side wall of the vessel (10) at the level of the mixing chamber, forming a recess which is external to the vessel but within the outside contour thereof, and

– the transfer means is formed by at least one horizontal bar or arm (48) rotating above the flat bottom (14) of the mixing chamber (20) and therefore the vessel.

2. A unit according to claim 1 characterised in that the treatment apparatus and its motor rest on a horizontal table member (39) forming the base of said recess, said table member being slightly raised with respect to the bottom of the vessel in order to permit the arm to pass freely.

3. A unit according to one of claims 1 and 2 characterised in that the enclosure (36) is provided with an upper wall (37) in the form in section of an inverted V, so as to permit the material to flow away.

4. A unit according to claim 1 characterised in that said arm (48) is of a length which is slightly less than the inside radius of the cylindrical vessel and rotates around one of its ends.

5. A unit according to claim 1 characterised in that said arm is of a length which is slightly less than the inside diameter of the vessel and rotates about its centre.

6. A unit according to one of the preceding claims characterised in that the arm and the Archimedean screw are driven from a single motor (52).

7. A unit according to claim 1 characterised in that the lower end of the Archimedean screw (40) is disposed at a lower level than that of the bottom (14) of the vessel and its upper end is at the level of the highest part of the mixing chamber facing an orifice (46) by way of which the material transported by the screw is discharged into the mixing chamber.

8. A unit according to claim 7 characterised in that the Archimedean screw (40) is enclosed in a vertical casing (42) which terminates in its lower part with a drain well (45) which is fed by gravity from the mixing chamber through an opening (44) formed in the wall of the vessel at the level of the bottom (14).

9. A unit according to one of the preceding claims characterised in that a plurality of horizontally disposed cylindrical bars (64) are disposed within the mixing chamber above the arm.

10. A unit according to claim 2 characterised in that the opening (43) for the introduction of the vitamin-enriched mineral complements into the mixing chamber is formed on the table member (39).

**Patentansprüche**

1. Vorrichtung zur Zubereitung von Tierfutter aus Ausgangsstoffen wie Getreideprodukten und vitaminisierten mineralischen Zusätzen, welche folgende Teile und Baugruppen umfasst:

– einen vorwiegend vertikal stehenden Bottich (10), dessen Innenraum durch eine schräge Trennwand (16) in eine obere Vorratskammer (18), die zum Speichern der hauptsächlichen Ausgangsstoffe dient, und in eine untere Mischkammer (20) unterteilt ist, in welcher die Mischung mit über eine Öffnung (43) direkt in diese Kammer zugeführten Zusatzstoffen erfolgt;

– eine Behandlungseinrichtung (28) wie ein Brech- oder Quetschwerk (28), die in einem umschlossenen Raum (36) im Innenraum des Bottichs angeordnet ist, und einen Motor (34) zum Betrieb dieser Einrichtung;

– eine Einrichtung (22, 26, 41) für die Überleitung der Ausgangsstoffe jeweils aus dem untersten Abschnitt der Vorratskammer (18) in die Behandlungseinrichtung (28) und aus dieser Einrichtung in die Mischkammer;

– eine Archimedische Schnecke (40) mit vertikaler Achse, die auf der Seite, auf der die Mischkammer am höchsten ist, in Längsrichtung des Bottichs angeordnet ist, und

– eine in Drehbewegung versetzbare und horizontal über dem Boden der Mischkammer angeordnete Einrichtung (48) zum Weiterleiten des aus der Behandlungseinrichtung zur Basis der Archimedischen Schnecke austretenden Produktes, dadurch gekennzeichnet, dass

– der Bottich (10) ein zylindrischer Bottich mit vertikaler Achse und ebenem Boden (14) ist,

– dass der umschlossene Raum (36) neben der Behandlungseinrichtung (28) auch den zugehörigen Antriebsmotor (34) enthält und durch einen einspringenden Abschnitt (30) der seitlichen Wandung (10) in Höhe der Mischkammer begrenzt ist, so dass aussen am Bottich, jedoch innerhalb dessen Aussenabmessungen, ein einspringender Absatz entsteht, und

– dass die Einrichtung zur Weiterleitung aus mindestens einer sich über dem ebenen Boden (14) der Mischkammer (20) und somit des Bottichs drehenden horizontalen Stange bzw. einem horizontalen Waagebalken (48) besteht.

2. Vorrichtung nach Anspruch 1, dadurch gekennzeichnet, dass die Behandlungseinrichtung und der zugehörige Motor auf einer horizontalen Platte (39) abgestützt sind, die die Basis des einspringenden Abschnitts bildet und etwas höher als der Boden des Bottichs angeordnet ist, so dass der Waagebalken ungehindert durchführbar ist.

3. Vorrichtung nach Anspruch 1 oder 2, dadurch gekennzeichnet, dass der umschlossene Raum (36) mit einer oberen Wandung (37) mit umgekehrt V-förmigem Querschnitt versehen ist, so dass ein Abfliessen des Futtermittels möglich ist.

4. Vorrichtung nach Anspruch 1, dadurch gekennzeichnet, dass der Waagebalken (48) eine etwas geringere Länge als der Innenradius des zylindrischen Bottichs aufweist und um eines seiner Enden drehbar ist.

5. Vorrichtung nach Anspruch 1, dadurch gekennzeichnet, dass der Waagebalken eine etwas geringere Länge als der Innendurchmesser des Bottichs aufweist und um seinen Mittelpunkt drehbar ist.

6. Vorrichtung nach einem der vorhergehenden Ansprüche, dadurch gekennzeichnet, dass der Waagebalken und die Archimedische Schnecke von einem einzigen Motor (52) aus antreibbar sind.

7. Vorrichtung nach Anspruch 1, dadurch gekennzeichnet, dass das untere Ende der Archimedischen Schnecke (40) tiefer liegt als der Boden (14) des Bottichs, während ihr oberes Ende sich in Höhe des obersten Abschnitts der Mischkammer gegenüber einer Öffnung (46) befindet, durch welche das von der Schnecke geförderte Material in die Mischkammer fällt.

8. Vorrichtung nach Anspruch 7, dadurch gekennzeichnet, dass die Archimedische Schnecke (40) von einem vertikalen Gehäuse (42) umschlossen ist, das im unteren Abschnitt in einem Auslaufschacht (45) endet, in den das Futter unter Einwirkung der Schwerkraft aus der Mischkammer über eine in der Wandung des Bottichs in Höhe des Bodens (14) gebildete Öffnung (44) zuführbar ist.

9. Vorrichtung nach einem der vorhergehenden Ansprüche, dadurch gekennzeichnet, dass im Inneren der Mischkammer oberhalb des Waagebalkens mehrere zylindrische Stangen (64) horizontal befestigt sind.

10. Vorrichtung nach Anspruch 2, dadurch gekennzeichnet, dass die Öffnung (43) zum Zusetzen vitaminisierter mineralischer Zusatzstoffe in die Mischkammer auf der Platte (39) ausgebildet ist.

FIG. 1

FIG. 2

FIG. 3